# EUROPEAN PATENT SPECIFICATION

(11) **EP 2 041 197 B1**
(45) Date of publication and mention of the grant of the patent: **12.11.2014**
(21) Application number: 07786019.5
(22) Date of filing: 12.07.2007
(51) Int. Cl.: C08F 283/01, C08G 63/676, C09D 151/00, C09D 151/08, C08L 51/00

(54) **PROCESS FOR PREPARING ORGANIC NANOPARTICLES**
VERFAHREN ZUR HERSTELLUNG VON ORGANISCHEN NANOTEILCHEN
PROCÉDÉ POUR LA PRÉPARATION DE NANOPARTICULES ORGANIQUES.

(30) Priority: 14.07.2006 EP 06014647
(43) Date of publication of application: 01.04.2009
(73) Proprietor: DSM IP Assets B.V., 6411 TE Heerlen (NL)
(72) Inventor: BROUNS, Matthias Jozef Gertruda, NL-6462 CV Kerkrade (NL); FRIEDERICHS, Joseph Petronella, NL-6019 CC Wessem (NL); JANSEN, Johan Franz Gradus Antonius, NL-6165 AP Geleen (NL); DRIESSEN, Marco Marcus Matheus, NL-6051 LH Maasbracht (NL)
(74) Representative: Kirk, Martin John
(86) International application number: PCT/EP2007/006187
(87) International publication number: WO 2008/006580

(56) References cited:
- WO-A-00/73361
- WO-A-03/093367
- WO-A-2005/045525
- DE-A1- 1 720 852
- GB-A- 1 327 111
- GB-A- 1 380 044
- GB-A- 1 405 923
- US-A- 5 416 159
- US-B1- 6 242 528

## Description

The present invention relates to a process for preparing organic nanoparticles; the use of said organic nanoparticles as plastic pigment for paper coatings; and paper comprising a coating that comprises said organic nanoparticles.

Pigments are widely used in paper production to improve the brightness, opacity and printability of the paper to be produced. The major pigment used in the paper industry is calcium carbonate, which material has the disadvantage that its properties can not easily be adjusted to meet particular paper requirements, due to the fact that the existing limitations of present grinding techniques. To deal with this problem it has been proposed to use polymer pigments in paper. The polymer pigments that have been proposed so far have, however, the disadvantage that they display film forming when subjected to pressure and an aqueous environment.

Object of the present invention is to provide improved organic nanoparticles. In one aspect, the improvement may for example be that the nanoparticles display tunable high temperature shape stability and/or that they show adjustable ability to be film forming when utilized for paper preparation process.

Another object of the invention was to provide an improved process for making such nanoparticles. In one aspect, the improvement of the process may for example be that the process is more versatile and provides a more predictable outcome.

Surprisingly, it has now been found that this can be established when use is made of a particular multi-step process.

Accordingly, the present invention relates to a process for preparing organic nanoparticles comprising the steps of:
(a) preparing a solution comprising an unsaturated polyester and/or a vinyl ester resin, an initiator and a hydrophobic monomer;
(b) emulsifying the solution obtained in step (a) in an aqueous phase; and thereafter
(c) curing the emulsified solution.

The organic nanoparticles particles obtained in accordance with the present invention can, because of their tunable high temperature shape stability, very attractively be used as pigment in paper applications. In addition, the nanoparticles may be agglomerated to form microparticles, which have a high pore volume, and thus a low density, which makes them very attractive for various other applications such as, for instance, application as fillers in composite materials for example in the automotive industry. Another advantageous application is as shrink reduction agent for composite materials or coatings (especially for materials with a resin based on polyester and/or vinylester polymers) as the cured nanoparticles or microparticles will not shrink during curing of the material wherein it is used, while maintaining other properties, such as thermal expansion and chemical properties. The particles may for example also be used as gloss agent or matting agent in coatings, such as paper coating or in paper treatment. The ability of the nanoparticles to promote gloss or matting may be adjusted by selecting the type of resin and monomers as well as by adjusting particle size and cross link density.

The solution is prepared by dissolving unsaturated polyester and/or a vinyl ester resin and an initiator in the hydrophobic monomer. The solution may comprise further components, which may be solved or suspended in the solution. Examples of further components are dyes; pigments; conductive material, such as metal particles; additives, such as emulgators, surfactants; small organic compounds, such as hydrophilic monomer; fillers, such as inert inorganic or organic particles and/or cross linkers, such as organic compounds with more than one functional group capable of reacting with vinyl-type double bonds. However, in a preferred embodiment, the solution consists of unsaturated polyester and/or vinyl ester resin, initiator and hydrophobic monomer.

The hydrophobic monomer to be used in accordance with the present invention can suitably be selected from the group consisting of aromatic (vinyl) compounds, methacrylates and acrylates. The term hydrophobic monomer as used herein hence encompasses traditional monomers and other compounds with a molecular weight smaller than 500 g/mole being capable of reacting with the unsaturated polyester and/or vinylester resin to form a cross linked network upon curing, as well as mixtures comprising at least two species within the term hydrophobic monomer.

In a preferred embodiment of the invention, the hydrophobic monomer is an aromatic (vinyl) compound, more preferably an aromatic vinyl monomer, and most preferably styrene. In a preferred embodiment, at least 50 weight-% of the hydrophobic monomer is styrene and more preferably between 70-95 weight-% of the hydrophobic monomer is styrene. The use of styrene is advantageous due to the low cost of styrene and the high durability of nanoparticles according to the invention when comprising styrene.

From an environmental point of view, the amount of styrene should be limited. Hence, in another embodiment of the invention, the solution comprises less than 40 weight-% styrene upon initiation of step (b) and preferably solution comprises less than 10-30 weight-% styrene upon initiation of step (b). Another advantage of limiting the amount of styrene is to reduce of even remove the release of unreacted styrene in the final product, which release may otherwise lead to a smell of styrene in the final product.

Besides the hydrophobic monomer also hydrophilic monomers may be present, although they - if present - will be present in an amount lower by weight than the amount of the hydrophobic monomer. Examples of such hydrophilic monomers include acrylic acid, methacrylic acid, hydroxyethylacrylate, and hydroxyethylmethacrylate. Usually such hydrophilic monomers will be present in an amount of less than 10 %wt, based on total solution prepared in step (a) to prevent extended curing in the water phase, as it was found that bridging flocculation leads to unstable emulsions during step (b).

By unsaturated polyester and/or vinyl ester resin is herein meant a polyester having at least one carbon-carbon double bond capable of undergoing radical polymerisation, a vinyl ester having at least one carbon-carbon double bond capable of undergoing radical polymerisation or a (physical or co-polymerized) mixture of unsaturated polyester and unsaturated vinyl ester having at least one carbon-carbon double bond per resin molecule capable of undergoing radical polymerisation.

According to a preferred embodiment of the invention, the unsaturated polyester and/or the vinyl ester resin has (have) a number average molecular weight per reactive unsaturation in the range of from 250-2500 g/mol, more preferably in the range of from 500 to 1500 g/mol. To enhance formation of larger polymer molecules during curing, it is preferred that the unsaturated polyester and/or vinyl ester resin has at least 1 reactive unsaturation per molecule. If the unsaturated polyester and/or vinyl ester resin has 1 reactive unsaturation per molecule, then a cross linker should be added to enhance formation of a (three dimensional) polymer network. In a highly advantageous embodiment, the unsaturated polyester and/or vinyl ester resin has an average of at least 1.5 reactive unsaturations per molecule, which leads to organic nanoparticles with a well crosslinked composition. Particularly when the unsaturated polyester and/or vinyl ester resin has an average of at least 2.0 reactive unsaturations per molecule, a highly crosslinked and hence relatively rigid nanoparticles are realized. The average of reactive unsaturations is preferably less than 5.0 reactive unsaturations per molecule to have a better control of the curing process. It was found that by varying the cross link density, the high temperature shape stability could be tuned from relatively soft for low cross link densities to relatively rigid for high cross link density.

In an attractive embodiment of the present invention, the unsaturated polyester and/or the vinyl ester resin has (have) an acid value in the range of from 0 to 200 mg KOH/g resin, such as 1 to 200 mg KOH/g resin, and preferably in the range of from 10-50 mg KOH/g resin. In a preferred embodiment, the unsaturated polyester resin - if present - has an acid value in the range of from 10-50 mg KOH/g resin and the vinyl ester resin - if present - has an acid value in the range of from 0-10 mg KOH/g resin.

The average molecular weight of the unsaturated polyester and/or the vinyl ester resin to be used in accordance with the present invention is preferably in the range of from 250 to 5000 g/mol. It was found that for lower molecular weights a cross linked network is not easily formed, and for higher molecular weights the micelle size (and hence the size of the nanoparticles) becomes very large and hence harder to stabilize. More preferably the average molecular weight of the unsaturated polyester and/or vinyl ester resin is in the range of from 500 to 4000 g/mol, as this allows for a relatively low.viscous solution and yet leads to fast build up of molecular weight during curing.

According to another preferred embodiment, the weight ratio of the unsaturated polyester and/or the vinyl ester resin (A) and the hydrophobic monomer (B) in the solution in step (a) is in the range of from 95/5 - 30/70 (A/B), more preferably in the range of from 80/20 - 40/60, and most preferably in the range of from 75/25-50/50. This ratio leads to a superior balance between hydrophilic and hydrophobic properties of the solution and hence yields advantageous emulsions after step (b).

Preferably, the resin solution obtained in step (a) is substantially free from a solvent other than the hydrophobic monomer. By solvent is meant an organic solvent and hence the solution may comprise water even though this is not preferred. By substantially free is here meant that the content of solvent is less than 1 weight-% of the solution, but it is generally more preferred that the content of the solvent is less than 0.1 weight-% and most preferred is to have no solvent in the solution. This has the advantage that the nanoparticles to be obtained display film forming to even a lesser extent.

Although a mixture of an unsaturated polyester and vinyl ester resin can be used, preferably only one of the two types of compounds will be used.

The aqueous phase to be use in step (b) of the process according to the present invention is preferably a continuous aqueous phase. The aqueous phase may comprise hydrophilic organic compounds, such as alcohol, for example methanol, ethanol, propanol or butanol; DMF, DMSO, organic or inorganic salts. Said continuous aqueous phase preferably comprises a base with a pKa of at least 10 in an effective amount to neutralize at least part of the terminal acid groups of the unsaturated polyester and/or vinyl ester resin. It is preferred that the base is added in an amount to obtain an emulsion with a pH of 3-10, as this allows for an improved control of the particle size of the nanoparticles. Further it was observed experimentally that the effect of adjusting pH was particularly strong for pH of 6-8. It could be theorized without being limited thereto that the improved control of particle size is due to improved control of the polarity of the solution droplets in the emulsion and thereby controlling the size of the stable solution droplets in the emulsion. By "an emulsion with a pH of ..." is herein meant the pH value measured by a pH meter (Probe Mettler-Toledo Inpro 200/Pt1000 - also used for temperature measurements) upon insertion of the sensor directly into the emulsion.

Surprisingly it was found, that the timing of the addition of the strong base, e.g. a base with a pKa of at least 10, strongly influences the outcome of the process. Particularly, it was found that by adding the base after addition of the solution in the aqueous phase a much more stable emulsion is formed leading to substantially less gel formation in the aqueous phase and hence improves the controllability of the curing process leading to improved results.

The amount of the base to be used will be calculated on the basis of the acid value of the solution prepared in step (a). Examples of suitable bases include KOH, NaOH, ammonia and triethylamine. As a result of the use of said base, the solution prepared in step (a) will easily emulgate.

In one embodiment, at least one emulsifier is added prior to and/or during step (b) to enhance the emulgation process. The emulsifier is then chosen from the cationic emulsifiers, anionic emulsifiers and/or non-ionic emulsifiers. Examples of suitable emulsifiers (also referred to as surfactants) are listed in "Applied Surfactants - principles and application" by Tharwat F. Tadros, (2005), JOHN WILEY AND SONS LTD, incorporated herein by reference. However, emulsifiers are costly and any residual amount in the final product represents a safety and/or health issue in certain applications, such as packaging of food or medicals (?). It will therefore be appreciated that the process according to the present invention may be conducted without emulsifier being added during the process.

It is essential that the emulsion is an oil in water emulsion (in the sense that discrete droplets of the solution is emulsified in the water) and not a water in oil emulsion where the organic phase is the continuous phase. The oil in water emulsion leads to a superior process control with regard to resulting size of the nanoparticles, since the resulting particle size corresponds to the size of the droplet, and a highly advantageous control of the temperature during the exothermal curing reaction. Typically, the droplet size of the solution is about 5-1000 nm in the aqueous emulsion, and in an advantegous embodiment, the droplet size of the solution is 50-400 nm in the aqueous emulsion. The size of the solution droplets refers to the average diameter as established by laser diffraction (Beckman-Coulter LS230).

The amount of water to be used in step (b) will depend on the desired solids content, as well as on the amount of the base to be used. In general, a high solid content is considered advantageous as this leads to better process control and less waste. However, since the water also acts as a temperature buffer during the exothermal curing process and the organic phase should not be continuous in the emulsified stage. If a dye or pigment is present, very high solid contents may be realized whereas if no dye or pigment is present, then the emulsions were stable for solid contents of about 10-40 weight-%. It was found that a solid content of 10-60 weight-% in the emulsion was most advantageous, and surprisingly, stable emulsions with a solid content of up to 20-40 weight-% could be realized. By a stable emulsion is herein meant that the emulsion does not show phase separation within 2 hours after , preparation. In a highly preferred embodiment, the cured emulsion having a solid content of 20-40 weight-% solids were also formed a stable emulsion.

The temperature at which step (b) is carried out can suitably range of from 10 to 100°C, preferably of from 15 to 90°C, whereas said step (b) can be carried out during a period of time in the range of from 30 minutes to 48 hours, preferably from 1 hour to 4 hours.

In step (b) the solution prepared in step (a) can suitably be emulsified by adding it under stirring to the aqueous phase. Suitably, the solution prepared in step (a) is added to the aqueous phase by means of mechanical mixing. The mixing may be simple stiring or high shear mixing.

In a preferred embodiment, the unsaturated polymer is an unsaturated polyester. The highly acid functional unsaturated polyesters are preferred, as these provide high acid values, which facilitate emulsification. Preferably, the unsaturated polyester is a substantially linear polyester. By substantially linear is herein meant that at least 80 weight-% of the polyester is in the backbone of the polymer.

Preferably, the unsaturated polyester is a multi-unsaturated polyester, i.e. the average number of unsaturations is greater than 1 per molecule.

Examples of suitable unsaturated polyester or vinyl ester resins that can be used in accordance with the present invention are subdivided in the categories as classified by Malik et al. in J.M.S. - Rev. Macromol. Chem. Phys., C40(2&3), p.139-165 (2000), and include:
(1) Ortho-resins: these are based on phtalic anhydride, maleic anhydride, or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A. Commonly the ones derived from 1,2-propylene glycol are used in combination with a reactive diluent such as styrene.
(2) Iso-resins: these are prepared from isophtalic acid, maleic anhydride or fumaric acid, and glycols. These resins may contain higher proportions of reactive diluent than the ortho resins.
(3) Bisphenol-A-fumarates: these are based on ethoxylated bisphenol-A and fumaric acid.
(4) Chlorendics: are resins prepared from chlorine/bromine containing anhydrides or phenols in the preparation of the UP (unsaturated polyester) resins.
(5) Vinyl ester resins: these are resins, which are mostly used because of their hydrolytic resistance and excellent mechanical properties, as well as for their low styrene emission, are having unsaturated sites only in the terminal position, introduced by reaction of epoxy resins (e.g. diglycidyl ether of bisphenol-A, epoxies of the phenol-novolac type, or epoxies based on tetrabromobisphenol-A) with (meth) acrylic acid. Instead of (meth)acrylic acid also (meth)acrylamide may be used.

Besides these classes of resins also so-called dicyclopentadiene (DCPD) resins and vinyl ester urethanes can be used in accordance with the present invention.

The above-mentioned resins may be modified according to methods known to the skilled man, e.g. for achieving lower acid number, hydroxyl number or anhydride number, or for becoming more flexible due to insertion of flexible units in the backbone. The class of DCPD-resins is obtained either by modification of any of the above resin types by Diels-Alder reaction with cyclopentadiene, or they are obtained alternatively by first reacting maleic acid with dicyclopentadiene, followed by the resin manufacture as indicated hereinabove.

Other reactive groups that are curable by a radical reaction may also be present in the resins, i.e. the unsaturated polyester and/or vinyl ester resin to be used in accordance with the present invention. Unsaturated polyester and/or vinyl esters resins are advantageous in providing more acid stable nanoparticles. Unsaturated polyester and/or vinyl esters may, for instance, include reactive groups derived from itaconic acid, citraconic acid and allylic groups.

The unsaturated polyester resins and/or vinyl ester resins to be used in accordance with the present invention may be any of the above types of resins or a mixture of two or more of these resins. Preferably, however, they are chosen from the group consisting of iso-phtalic resins and ortho-phtalic resins and vinyl ester resins:

More preferably, the resin is an unsaturated polyester resin chosen from the group consisting of DCPD-resins, iso-phthalic resins and ortho-phtalic resins, as these provides the highest acid values.

The unsaturated polyester resins and/or vinyl ester resins to be used in accordance with the present invention contain reactive unsaturations, i.e. unsaturations which are capable of undergoing a radical (co)polymerisation, and they may in addition contain unreactive unsaturations like the aromatic ring in phtalic anhydride.

The unsaturated polyester resins or vinyl ester resins to be used in accordance with the present invention may contain solvents. The solvents may be inert to the resin system or may be reactive therewith during the curing step. Hydrophobic monomers are required for the invention and act as a reactive diluent. Examples of suitable hydrophobic monomers are for instance aromatic vinyl compounds like styrene, α-methyl styrene, divinyl benzene; methacrylates like: t-butyl methacrylate, cyclohexyl methacrylate, phenoxy methacrylate, phenoxy ethyl methacrylate, lauryl methacrylate; acrylates like t-butyl acrylate, nonylphenol acrylate, cyclohexyl acrylate, lauryl acrylate, isodecyl acrylate , isobomyl acrylate; allyl compounds like diallylphtalate, isodecylallyl ether; vinyl ethers like butyl vinyl ether, laurylvinyl ether and the like as well as mixtures thereof.

The initiator to be used in accordance with the present invention can suitably be at least part of an initiator complex. Such an initiator complex can be any radical initiator such as, for instance, diazo compounds, persulphates or peroxides. Furthermore, the initiator complex can be a one-component initiator complex which decomposition is triggered by heat or it can be a two-component initiator complex of which the initiation is triggered via the addition of a co-initiator. In both cases, i.e. the one-component initiator complex and the two-component initiator complex, at least one of the initiator components needs to be oil soluble.

Preferably the, radical initiator in the initiator complex is selected from the group of peroxides.

The peroxide component can be any peroxide known to the skilled man for being used in the curing of unsaturated polyester resins or vinyl ester resins. Such peroxides include organic and inorganic peroxides, whether solid or liquid. Examples of suitable peroxides are, for instance hydrogen peroxide, peroxy carbonates (of the formula -OC(O)O-), peroxyesters (of the formula -C(O)OO-), diacylperoxides (of the formula -C(O)OOC(O)-), dialkylperoxides (of the formula -OO-), etc. The peroxides can also be oligomeric or polymeric in nature. An extensive series of examples of suitable peroxides can be found, for instance, in US 2002/0091214-A1, paragraph [0018].

Preferably, the peroxide is chosen from the group consisting of organic peroxides. Examples of suitable organic peroxides are: tertiary alkyl hydroperoxides (such as, for instance, t-butyl hydroperoxide), other hydroperoxides (such as, for instance, cumene hydroperoxide), the special class of hydroperoxides formed by the group of ketone peroxides (perketones, being an addition product of hydrogen peroxide and a ketone, such as, for instance, methyl ethyl ketone peroxide, methyl isobutyl ketone peroxide and acetylacetone peroxide), peroxyesters or peracids (such as, for instance, t-butyl peresters, benzoyl peroxide, peracetates and perbenzoates, lauryl peroxide, including (di)peroxyesters),-perethers (such as, for instance, peroxy diethyl ether). Often the organic peroxides used as curing agent are tertiary peresters-or tertiary hydroperoxides, i.e. peroxy compounds having tertiary carbon atoms directly united to an -OO-acyl or -OOH group. Clearly also mixtures of these peroxides with other peroxides may be used in the context of the present invention. The peroxides may also be mixed peroxides, i.e. peroxides containing any two of different peroxygen-bearing moieties in one molecule). In case a solid peroxide is being used for the curing, the peroxide is preferably a benzoyl peroxide (BPO).

In particular, it is preferred that the peroxide is selected from the group consisting of ketone peroxides, a special class of hydroperoxides. The peroxide being most preferred in terms of handling properties and economics is methyl ethyl ketone peroxide (MEK peroxide).

Preferably, at least one part of the initiator complex is selected from the group consisting of peranhydrides, peresters and hydroperoxides, including perketones.

Step (a) of the process according to the present invention can be carried out at a temperature in the range of from 10 to 100°C, preferably in the range of from 20 to 50°C.

In a preferred embodiment of the present invention, the pH of the aqueous emulsion obtained in step (b), after formation of the polymer-based nanoparticles, is in the range of from 3 to 11, preferably in the range of from 6 to 8.

The curing of the aqueous emulsion obtained in step (b) strongly depends on the type of initiator complex used.

In case a one-component initiator complex is used in step (a), the curing in step (c) can be established by the activation of the initiator complex by application of heat. In case of such a thermal activation of the initiator complex, the temperature of the aqueous emulsion obtained in step (b) can be gradually increased to the desired temperature, for instance by heating the emulsion slowly to a temperature of 70°C during a period of time of three hours.

Apart from thermal activation of the initiator complex, use can be made of a redox initiation in step (c). In that case an aromatic amine can, for instance, be dissolved together with benzoyl peroxide in the unsaturated polyester and/or vinyl ester resin. In order to ensure that reaction does not immediately occur, thus inhibiting the polymerisation, an inhibitor may suitably be used in an amount so as to ensure that the curing process will only start after step (b) has been initiated.

In step (a) of the present invention also (i) a catalyst and (ii) an inhibitor for inhibiting at least part of the polymerisation of the unsaturated polyester and the monomer during steps (a) and (b) may be added to the solution of the unsaturated polyester and the monomer.

Hence, in a preferred embodiment of the present invention, the solution prepared in step (a) may also contain one or more inhibitors. More preferably, the solution prepared in step (a) comprises one or more inhibitors, preferably chosen from the group of phenolic compounds, stable radicals like galvinoxyl and N-oxyl based compounds, catechols and/or phenothiazines.

The amount of inhibitor used in the solution prepared in step (a) may, however, vary within rather wide ranges, and may be chosen as a first indication of the gel time as is desired to be achieved. Preferably, the amount of phenolic inhibitor is from about 0.001 to 35 mmol per kg of the solution prepared in step (a), and more preferably it amounts to more than 0.01, most preferably more than 0.1 mmol per kg of the solution prepared in step (a). The skilled man quite easily can assess, in dependence of the type of inhibitor selected, which amount thereof leads to good results according to the invention.

Suitable examples of inhibitors that can be used in the solution prepared in step (a) are, for instance, 2-methoxyphenol, 4-methoxyphenol, 2,6-di-t-butyl-4-methylphenol, 2,6-di-t-butylphenol, 2,4,6-trimethyl-phenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone, 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), aluminium-N-nitrosophenyl hydroxylamine, diethylhydroxylamine, phenothiazine, gallic acid, propyl gallate and/or derivatives, salts or combinations of any of these compounds. In another embodiment, the inhibitor is a chain transfer agent, such as mercapto ethanol, mercapto acetic acid, mercapto propionic acid, their derivates, their salts or combinations of these.

Solvent soluble inhibitors are particularly advantageous when an activator (also referred to as a promoter) is present in the solution prior to emulsifying of the solution in the water phase. In this case, the inhibitor is preferably added to the solution prior to addition of the activator / promoter to ensure that substantial curing does not take place until the emulsification has taken place, i.e. during steps (a) and (b). Typically, the inhibitor is used or degrades / reacts during step (a) and/or (b) so that the curing reaction is initiated when the inhibitor concentration decreases to below a threshold value. Hence, a solvent soluble inhibitor is suitably present in an effective amount to inhibit polymerisation during steps (a) and (b).

In a highly advantageous embodiment, the inhibitor is a water soluble inhibitor or a hydrophilic inhibitor. Typically, a water soluble inhibitor should be added to the water phase prior to or during emulsifying the solution into the water phase. This allows for inhibiting the curing reaction in the water phase and hence prevents or at least greatly reduces bridging flocculation in the water phase. The effect of water soluble and solvent soluble inhibitors are hence completely different, and hence both water soluble and solvent soluble inhibitors may advantageously be present in the emulsion, particularly if an activator is used in the organic phase. Preferably, the water soluble inhibitor is selected from the group consisting of gallic acid, propyl gallate, Tempol, Tempon, derivates, salts or combinations thereof.

The catalyst to be used in step (a) can suitably be a tertiary aromatic amine selected from the group consisting of dimethylaniline, dimethyltoluidine, 4-tertiary-butyl-N,N-dimethylaniline, 4-methoxy-dimethylaniline, diethylaniline, diethyl-toluidine, N,N-diisopropylaniline, diisopropyltoluidine, dimethylolaniline, dimethylol-toluidine, N,N-diethanolaniline, N,N-diethanoltoluidine, N,N-diethanolaniline mono-methylether, N,N-diethanolaniline dimethylether, N,N-diisopropanolaniline, N,N-diisopropanoltoluidine, N,N-diisopropanoltoluidine monomethyl ether, N,N-diisopropanoltoluidine dimethyl ether, N,N,N',N'-tetramethylbenzidine, 4,4'-methylene-bis(2,6-diisopropyl-N,N-dimethylaniline), 4,4'-vinylidene-bis(N,N-dimethylaniline), N,N-digly-cidyl-4-glycidyloxyaniline, N,N-diglycidylaniline, 4-dimethylaminophenethyl alcohol, 4,4-methylene-bis(N,N-bis-glycidylaniline). Also ethoxylated or propoxylated anilines, respectively ethoxylated or propoxylated toluidines may suitably be used. Preferably said amine compound is chosen from the group of aromatic tertiary amines having a β-hydroxy or a β-alkoxy (generally C₁₋₁₂) substituent. Suitable examples of aromatic tertiary amines, and of β-hydroxy- or β-alkoxy-substituted aromatic tertiary amines are shown in the above list of tertiary amines.

One or more catalysts can be used in accordance with the present invention.

Suitably, the amount of catalyst in the solution in step (a) is in the range of from 0.01 to 10 % by weight, based on the total weight of the solution prepared in step (a). More preferably, the amount of inhibitor in the solution prepared in step (a) is in the range of from 0.1 to 2 % by weight, based on the total weight of the solution prepared in step (a).

It is essential that the curing of treatment takes place while the solution is emulsified in the water, as this leads to a superior process control with regard to e.g. particle size of the resulting nanoparticles. In other words, the curing should take place prior to application of the emulsified solution to a substrate (for example a substrate to be coated). During curing, the unsaturated polyester and/or vinyl ester resin reacts with the hydrophobic monomers, whereby a rigid cross linked polymeric network is formed within each droplet or micelle. The curing treatment in step (c) suitably comprises increasing the temperature of the aqueous emulsion obtained in step (b) to a temperature in the range of from 30-100°C, preferably in the range of from 70-90°C.

Accordingly, the emulsification step (b) can be performed at roomtemperature after which the emulsion is heated to 30-100°C, preferably to 70-90°C. Depending on the type of one-component initiator complex to be used there will be an optimum in temperature versus curing time and curing speed. This optimum depends on the decomposition temperature of the one-component initiator complex employed. This optimum can be shifted by using the inhibitor, which has a strong impact on the gel time.

Step (b) can be carried out in the absence or presence of an additional emulgator. Preferably, however, step (b) is carried out in the absence of an additional emulgator.

In the process according to the present invention, the sum of the respective periods of time of steps (b) and (c) is suitably in the range of from 0.5 hour to 48 hours.

It is emphasized that by curing is herein meant the process of forming crosslinks between the molecules of the unsaturated polyester and/or vinyl ester resin by the hydrophobic monomer. The curing must take place while the solution is emulsified, as discrete nanoparticles would otherwise not be formed. If for example the solution has been dried to form an (uncured) coating or allowed to form a precipitate prior to curing, then the curing process would not lead to formation of nanoparticles.

According to another embodiment of the invention, the curing step is performed by adding both components of a two-component initiation complex to the solution prepared in step (a). Preferably, both components of the initiator complex are oil soluble. In this case the use of inhibitors, which are described in detail in the fore going part of the invention, are essential. They postpone the start of the curing process so that a good emulsification can take place before the curing process begins. Preferred two-component systems for this embodiment are peresters or peranhydrides as one of the components in combination with tertiary aromatic amines as the second component, or hydroperoxides including perketones as one of the components in combination with a transition metal as the second component.

Suitable transition metals salts are selected from the group consisting of cobalt, vanadium, manganese, copper and iron salts. The transition metal salts can be water soluble or oils soluble. Oil soluble transition metal salts preferably comprise the transition metals carboxylates like such as C₆-C₂₀ carboxylates such as 2-ethyl hexanoates, octanoates, and isodecanoates. Preferably, the transition metal salt is used in amount of at least 0.05 mmol per kg of resin solution, more preferably in an amount of at least 1 mmol per kg of resin solution. The upper limit of the transition metal content is not very critical, although for reasons of cost efficiency of course no extremely high concentrations will be applied. Generally, the concentration of the transition metal salt in the solution prepared in step (a) will be lower than 50 mmol per kg of said solution, preferably lower than 20 mmol per kg of said solution. Of the group of transition metals copper is especially preferred.

In yet another embodiment of the invention, the curing process is started via the addition of the second component of a two-component initiator complex. This embodiment is especially preferred when one of the components of the two-component initiator complex is a water soluble component. Examples of such an two-component initiator complex are, for instance, an oil soluble transition metal salt as the first component in combination with a water soluble peroxide like for instance hydrogen peroxide as the second component, and an oil soluble peroxide as the first component in combination with a water soluble transition metal salt as the second component. Examples of water soluble transition metal salts are the chlorides, bromides, iodides, acetates lactates of the transition metals cited hereinabove.

The present invention also relates to the organic nanoparticles obtainable by the process in accordance with the present invention. These organic nanoparticles display unique properties in terms of stability, strength, porosity, and thus low density, which make them most attractive in, for instance, automotive applications, where traditionally heavy metal parts are used. In another aspect of the invention, the nanoparticles in accordance with the present invention have a high temperature stability of up to no less than 200°C, ensuring that no film forming will take place when these particles are used as a plastic pigment in the manufacturing of paper. The present organic nanoparticles can suitably have an average particle size (diameter as measured by laser diffraction (Beckman-Coulter LS230)) in the range of from 10 to 10000 nm. The high end corresponds to the situation where no base is added so that the emulsion is water of droplets (of µm size). In this case, very forceful mixing is required to realize the emulsion. Preferably, the average particle size of the nanoparticles is in the range of from 50 to 500 nm and more preferably in the range of 50 to 150 nm.

The present invention further relates to the use of the organic nanoparticles according to the present invention as plastic pigment, preferably as a plastic pigment for paper coating. In addition, the present invention relates to paper comprising a coating, which coating comprises nanoparticles in accordance with the present invention.

Further, the present invention also provides a process for preparing organic microparticles by subjecting organic nanoparticles obtainable by means of the present process to a spray-drying treatment and/or a coagulation treatment and/or an agglomeration process, and recovering the organic microparticles. The agglomeration process may for example take place via an increase in pH or by evaporation of water or a solvent.

An important advantage of the present invention is, that if the nanoparticles or microparticles are isolated from the emulsion, then the particles are capable of being easily reemulsified in water to form a stable aqueous emulsion.

The present invention also relates to the organic microparticles that are obtainable by the process according to the present invention. Also these organic microparticles display unique properties in terms of stability, strength, porosity, and thus low density. The present organic microparticles can suitably have an average particle size in the range of from 500 to 100000 nm, preferably in the range of from 1000 to 10000 nm.

The present invention also relates to the use of the organic microparticles obtainable by means of the present process in a sheet moulding compound.

In addition, the present invention relates to the use of the present organic nanoparticles and/or micro particles for encapsulating particles of a dye composition, and to dye compositions comprising the organic nanoparticles and/or microparticles in accordance with the present invention. Encapsulating of particles of dye composition may take place suspending particles of dye composition in the solution prior to emulsification or during emulsification, so that particles of dye composition is encapsulated in the nanoparticles during curing of the solution. Alternatively, the particles of dye composition may be added after the curing reaction, so that the encapsulation takes place during the optional agglomeration process.

Further, the present invention relates to the use of the present organic nanoparticles and/or microparticles as binder for a toner composition, and to toner compositions comprising the organic nanoparticles and/or microparticles in accordance with the present invention. Most important other highly advantageous examples of applications for the nanoparticles and/or the microparticles according to the invention are:
a) In SMC (Sheet molded compounds), where the presence of the particles (particularly spray dried particles) according to the invention leads to lower density of the products;
b) As plastic pigment, particularly for coatings, such as paper coatings, where the presence of the particles according to the invention may provide high gloss or tunable gloss properties of the product;
c) As fillers in composite materials and particularly in concrete, where the use as micro filler for example may increases the strength, lowers the porosity, reduces the density and/or prevent water penetration into structure;
d) As filler for coatings, where the use for example may provide anti blocking properties to the coating, increase scratch resistance, lower abrasion, increase drying speed, reduce the required amount of solvent, and reduce shrink;
e) As filler for waxes, where the particles according to the invention for example may provide a lubricating effect, reduce weight, reduce abrasion and/or act as a high temperature filler;
f) Monodisperse particles according to the invention may be used for spacers for example in display applications,
g) As hybrid pigment, where a pigment particle interacts with the particle according to the invention. The interaction may be realized via two fundamentally different routes. i) Dispersing the pigment particles in the emulsion prior to curing of the resin and monomer, whereby the often hydrophobic pigment particles tend to be arranged inside the droplets of the solution, and thereafter curing the solution to form encapsulated core pigments in a shell of cured polymer. ii) Co-agglomerating the pigment particles with the nanoparticles to form microparticles. Both methods lead to pigments, which are dispersible in water and partially accessible or inaccessible for direct contact with ambient atmosphere or material.
h) In adhesives, where the particles for example may be used as a filler or as a shrink reducing agent, since the particles will be inert during curing of the adhesive and yet provide a strong connection to the adhesive and hence not reduce the strength of the adhesive detrimentally.
i) As encapsulating agent for active ingredients. These ingredients are added to the emulsion prior to curing and remain in the particle upon curing. The resulting particles, which contain the active ingredient, are more easily dispersible and the active ingredient is protected. Examples of active ingredients are dyes and UV-blockers.

### Examples

The reactor used for the synthesis experiments was a 1 litre Baffled glass lined reactor equipped with mechanical stainless steel stirrer and fitted with a reflux condenser, a droplet funnel and a Mettler-Toledo Inpro 200/Pt1000 probe for pH and temperature measurements. The reactor was furthermore provided with a Lauda type K6Ks external heating/cooling to control reactor temperature.

### Example 1: Synthesis of nanoparticles

### Procedure: Initiation from the inorganic phase (Thermal initiation. BPO (Perkadox CH-50L))

An initiator/UP-solution was prepared by dissolving 8.1 gram BPO in 270 grams unsaturated polyester/styrene solution (DSM palatal P6-01). This resulted in a clear solution. Thereafter, 580 grams water was charged to the reactor. The stirrer was set to 650 rpm and the initiator/UP-solution was charged to the reactor during 15 minutes at room temperature. This resulted in the formation of an emulsion of initiator/UP-solution in water with a solid content of ca. 30 weight-%.

Then 8.1 grams KOH and 10 mg gallic acid (Sigma) was dissolved in 50 ml water and added to the reactor drop-wise over a period of 10-15 minutes until to the water/Initiator/UP mixture reached a pH of 6, which increased the stability of the emulsion substantially.

After 5 minutes further stirring at ca. 650 rpm, the temperature was raised to 70°C leading to a stable emulsion. The emulsion was allowed to cure under continued stirring for 6 hours at 70°C. The curing of the unsaturated polyester with the styrene led to a stable latex of suspended, cross linked nanoparticles in a water phase. The particle size distribution was determined by laser diffraction (Beckman-Coulter LS230) and showed that nanoparticles with particle diameters from detection level (ca. 40nm) up to ca. 400 nm and D50 of 120-130 nm was obtained. It was hence possible to provide nanoparticles by the method according to the invention.

### Example 2: Drying of suspension

A sample of the suspension from Example 1 was slowly dried at 40°C in air in a low temperature oven. The resulting powder was examined by Differential Thermal Calorimetry (DTC) and the powder showed a glass temperature (Tg) onset of 130°C and no "tacky" behaviour or even extremer effects (such as melt, flow or degradation) was observed up to 200°C. In other words, the resulting powder showed no effects of film formation. It has hence been demonstrated that the method according to the invention may provides a powder which exhibit no film formation up to 200°C.

### Example 3: Drying of suspension

To investigate the ability for the process to be up-scaled as well as the formation of micro particles, the dispersion from example 1 was also spray dried using a standard pilot plant spray dryer with the following parameters: Nozzle 0.34 mm, 70 bar air pressure, 180°C in spray tower, ca. 30 weight-% solids dispersion, throughput 200 g/min.

This resulted in an output of ca. 45 weight-% tower fraction (rougher particles) and ca. 55 weight-% cyclone fraction (finer particles). The combined free flowing dry powder consisted of hollow spheres formed by strongly bonded agglomerates of nanoparticles. The micro particles have a size (diameter measured by Sympatec Helos with Rodos dispersing unit) of 1-20 µm. This shows the nanoparticles prepared in Example 1 may be agglomerated into micro particles using standard equipment and processing.

### Comparative example 4: Synthesis of nanoparticles. Procedure: Initiation from the water phase (Thermal initiation. Potassium peroxo disulphate (water soluble)):

An initiator solution was prepared by dissolving 8.1 potassium peroxo disulphate in 50 grams water. Thereafter, 530 grams water was charged to the reactor. The stirrer was set to 650 rpm and the 270 grams unsaturated polyester dissolved in styrene (DSM Palatal P6) was charged to the reactor during 15 minutes at room temperature. This resulted in the formation of an emulsion of UP-solution in water. 8.1 grams KOH and 10 mg gallic acid (Sigma) was dissolved in 50 ml water and added to the reactor drop-wise over a period of 10-15 minutes until to the water/initiator/UP mixture reaches a pH of about 6.

Thereafter, the stirrer speed was set to 650 rpm for five minutes before the reactor was heated to ca. 70°C under continued stirring for initiation of the curing process.

It was observed that the system coagulated during the curing process, as the emulsion was not stable. The lack of stability appeared to be caused by a combination of the initiator being water soluble (leading to flocculation in the water phase during curing) and the high solid content in the emulsion (ca. 30 weight-%) as used herein.

The experiment showed that if a water soluble initiation system was used, the emulsion was difficult to stabilise during curing so that further precautions, such as introduction of an emulsifier to the mixture, was required. In other words, a water insoluble initiation system is highly advantageous for the present method, particularly when high solid content is used.

### Comparative example 5. Synthesis of nanoparticles.

### Procedure: No temperature control (Thermal initiation. BPO, Perkadox CH-50L):

Same procedure as in Example 1, except that during curing, the temperature was allowed to increase as a result of the exothermal curing reaction. It was observed that the system coagulated at 85°C, as the emulsion was not stable. The lack of stability seemed to be caused by a combination of the high temperature and the high solid content in the emulsion (ca. 30 weight-%) as used herein.

To realise nanoparticles according to the invention, the temperature should be kept lower than the coagulation temperature particularly during curing to keep the emulsion stable. It should be observed that the coagulation temperature depends on the actual system utilised, such as composition and concentration. The relevant coagulation temperature for a given system may easily be established by the person skilled in the art, for example based on the present comparative example.

### Comparative example 6. Synthesis of nanoparticles

### Procedure: No pH restrictions (Thermal initiation. BPO, Perkadox CH-50L):

The same procedure as in Example 1 was conducted except that prior to heating and curing the KOH/gallic acid solution was added till pH 11. After heating to 70°C the emulsion was unstable and the system coagulated within a few minutes. The lack of stability appeared to be caused by the combination of the high pH and the high solid content in the emulsion (ca. 30 weight-%). Hence, to achieve nanoparticles according to the invention, the pH should be kept lower than the coagulation pH at all times. It should be observed that the coagulation pH depends on the actual system utilised, including composition and concentration. The relevant coagulation pH for a given system may easily be established by the person skilled in the art. ,

### Comparative example 7. Synthesis of nanoparticles

### Procedure: No pH restrictions. Charging the base before the UP thermal initiation. BPO, Perkadox CH-50L):

The same procedure as in Example 1 was used, except that the solution of KOH and gallic acid was provided to the water to a pH of about 11.5 was reached prior to the initiator/UP solution being charged to the reactor at room temperature during 15 minutes.

Thereafter, the stirrer speed was set to 650 rpm for five minutes before the reactor was heated to ca. 70°C under continued stirring for initiation of the curing process. System coagulated after 5-60 minutes, in most cases already during charging the initiator/UP-solution.

Comparative examples 4 and 5 show that high solid dispersions required pH control in order to prevent coagulation. It appears that for the present system, keeping a value of pH below 7.5 may be a critical boundary. The exact value of the critical pH may depend strongly on the system, such as chemical composition, temperature, solid content and presence of optional emulsifier. Charging the base before the initiator/UP solution will yield the most extreme effects, as temporary pH values up to 12 will be reached often with immediately destabilization as a result.

### Example 8: Synthesis of nanoparticles

### Procedure: Redox initiation. BPO (Perkadox CH-50L):

An initiator/UP-solution was prepared by dissolving 8.1 gram BPO and 100 ppm Tertiarbutylcatechol (DTBC) (Inhibitor) in 270 grams unsaturated polyester/styrene solution (DSM palatal P6-01). This resulted in a clear solution. Thereafter, 580 grams water was charged to the reactor.

4 grams Dimethyl-p-toluidin (DMPT) (Accelerator) was added to the initiator/UP-solution, the stirrer was set to 650 rpm and the initiator/UP/accelerator-solution was charged to the reactor during 15 minutes at room temperature. This resulted in the formation of an emulsion of initiator/UP-solution in water with a solid content of ca. 30 weight-%.

Then 8.1 grams KOH and 10 mg gallic acid (Sigma) was dissolved in 50 ml water and added to the reactor drop-wise over a period of 10-15 minutes until to the water/initiator/UP mixture reached a pH of about 6, which increased the stability of the emulsion substantially.

The emulsion was cured under continued stirring for 6 hours at room temperature (25°C). The curing of the unsaturated polyester with the styrene led to a stable latex of suspended, cross linked nanoparticles in a water phase. The particle size distribution was determined by laser diffraction (Beckman-Coulter LS230) and showed that nanoparticles with particle diameters from detection level (ca. 40nm) up to ca. 250 nm and D50 of 90-95 nm was obtained. It was hence also possible to provide nanoparticles be the method according to the invention by a redox initiation system, which shows the versatility of the method according to the invention.

### Example 9: Synthesis of nanoparticles

### Procedure: Redox initiation. MEK-peroxide (Butanox M50):

An initiator/UP-solution was prepared by dissolving 8.1 gram MEK-peroxide in 270 grams unsaturated polyester/styrene solution (DSM palatal P4-01). This resulted in a clear solution. Thereafter, 580 grams water was charged to the reactor.

The stirrer was set to 650 rpm and the initiator/UP-solution was charged to the reactor during 15 minutes at room temperature. This resulted in the formation of an emulsion of initiator/UP-solution in water with a solid content of ca. 30 weight-%.

Then 8.1 grams KOH and 10 mg gallic acid (Sigma) was dissolved in 50 ml water and added to the reactor drop-wise over a period of 10-15 minutes until to the water/Initiator/UP mixture reached a pH of about 6, which increased the stability of the emulsion substantially. Under continued stirring 0.02 weight-% copper acetate based on the total solid content was added for initiation of the curing process. The emulsion was cured under continued stirring for 6 hours at room temperature (25°C). The curing of the unsaturated polyester with the styrene led to a stable latex of suspended, cross linked nanoparticles in a water phase. The particle size distribution was determined by laser diffraction (Beckman-Coulter LS230) and showed that nanoparticles with particle diameters from detection level (ca. 40nm) up to ca. 180 nm and D50 of 90-95 nm was obtained.

### Example 10: Drying of suspension

A sample of the suspension from Example 9 was slowly dried at 40°C in air in a low temperature oven resulting in a transparent brittle film. Palatal 4 (used in Example 10) has a lower degree of unsaturation than Palatal 6 (used in Example 1), which lead to the clearly in less rigid particles in Example 10. It may hence be concluded that variation in the composition of the resin and/or the process leads to nanoparticles with different properties. In other words, properties of the nanoparticles according to the invention are tuneable for example with regard to film formation.

### Example 11: Synthesis of nanoparticles

### Procedure: Redox initiation. MEK-peroxide (Butanox M50):

An initiator/UP-solution was prepared by dissolving 8.1 gram MEK-peroxide in 270 grams unsaturated polyester/styrene solution (DSM palatal P5-01). This resulted in a clear solution. Thereafter, 580 grams water was charged to the reactor. The stirrer was set to 650 rpm and the initiator/UP-solution was charged to the reactor during 15 minutes at room temperature. This resulted in the formation of an emulsion of initiator/UP-solution in water with a solid content of ca. 30 weight-%.

Then 8.1 grams KOH and 10 mg gallic acid (Sigma) was dissolved in 50 ml water and added to the reactor drop-wise over a period of 10-15 minutes until to the water/Initiator/UP mixture reached a pH of about 6, which increased the stability of the emulsion substantially.

Thereafter, the stirrer speed was set to 650 rpm for five minutes before the reactor was heated to 45°C under continued stirring and 0.02 weight-% copper acetate based on the total solid content was added for initiation of the curing process. The emulsion was allowed to cure for 8 hours at 45°C.

The emulsion was cured under continued stirring for 6 hours at room temperature (25°C). The curing of the unsaturated polyester with the styrene led to a stable latex of suspended, cross linked nanoparticles in a water phase. The particle size distribution was determined by laser diffraction (Beckman-Coulter LS230) and showed that nanoparticles with particle diameters from detection level (ca. 40nm) up to ca. 180 nm and D50 of 90-90 nm was obtained.

### Example 12: Dye encapsulation

### Procedure: Thermal initiation

An initiator/UP/dye-solution was prepared by dissolving 4.5 gram Lauryl peroxide (Luperox LP Aldrich) and 0.5 gram Methyl Yellow dye (Cas 60-11-7) in 280 gram unsaturated polyester dissolved in styrene (DSM palatal P6-01). This resulted in a yellow solution. Thereafter, 670 grams water was charged to the reactor. The stirrer was set to 650 rpm and the initiator/UP/dye-solution was charged to the reactor during 15 minutes at room temperature. This resulted in the formation of an emulsion of initiator/UP-solution in water with a solid content of ca. 30 weight-%.

Then 8.1 grams KOH and 10 mg gallic acid (Sigma) was dissolved in 50 ml water and added to the reactor drop-wise over a period of 10-15 minutes until to the water/initiator/UP mixture reached a pH of about 6, which increased the stability of the emulsion substantially.

After 5 minutes further stirring at ca. 650 rpm, the temperature was raised to 70°C leading to a stable emulsion. The emulsion was allowed to cure under continued stirring for 6 hours at 70°C. The curing of the unsaturated polyester with the styrene led to a yellow stable latex of suspended, cross linked nanoparticles in a water phase.

### Example 13: Dye encapsulation - Drying???

A sample of the suspension from Example 12 was slowly dried at 40°C in air in a low temperature oven resulting in a yellow powder, which upon rinsing with water remained yellow. This shows that the dye was incorporated in the nanoparticles during the synthesis in Example 12 or in the agglomerates during the drying process.

### Example 14: Tuneable gloss

In order to demonstrated the effect on gloss, the dispersion prepared in Example 1 (30% solids, Palatal 6) was used as source for plastic pigment in a coating formulation (coating compositions 1-4, below). Polyvinyl alcohol (PVA) was used as a binder. The ratio plastic pigment/binder was kept constant at 82 weight-% pigment in Coating 1-4. In Coating 5, the pigment/binder ratio was 60 weight-% pigment. The molecular weight of PVA was in the range of 31000-50000 grams/mole and the degree of hydrolysis 88-90%.

The coating formulations where then applied at Form HK penetration charts (219 mm x 286 mm, Leneta) via a K101 control coater (RK print coat instruments Ltd.) bar 50 µm. Thereafter the charts where dried at 140 °C for three minutes. Gloss was measured at an angle of 85° with a BYK-Gardner micro-Tri-gloss.

**Table 1: Gloss of coating compositions 1-4**

| Coating | Dispersion Example 1 | Plastic pigment | PVA | Water | Solids | Gloss (85°) |
|---|---|---|---|---|---|---|
| | (gram) | (gram) | (gram) | (gram) | (%) | (%) |
| 1 | 5 | 1.5 | 0.33 | 95 | 1.8 | 26.9 |
| 2 | 25 | 7.5 | 1.65 | 75 | 9.0 | 36.0 |
| 3 | 50 | 15.0 | 3.30 | 50 | 17.7 | 46.3 |
| 4 | 75 | 22.5 | 4.95 | 25 | 26.2 | 52.2 |
| 5 | 25 | 7.5 | 4.95 | 75 | 11.8 | 40.5 |

From the results concerning Coating 1-4 in Table 1 it is observed that the gloss is strongly improved when the overall load of plastic pigment according to the invention based on Palatal 6 is increased. By comparing Coating 2 to Coating 5, it is further observed that increasing PVA content only lead to a limited increase in gloss (ca. 4.5 points), whereas increasing the plastic pigment content (Coating 4 vs. 5) increased the gloss by 11.7 points. The nanoparticles according to the invention therefore may be used for tuning the gloss of coated substrate by changing the amount of nanoparticles or the composition of the nanoparticle.

It is emphasized that the synthesis of the nanoparticles according to the invention should be conducted below the coagulation temperature of the emulsion. For the examples described herein, it was found that the coagulation temperature was about 75, and hence all the examples were conducted at temperatures below 75. It was found that the maximum temperature of conducting the reaction - and particularly the curing step - depend on the concentration of initiator systems, monomer and unsaturated polyester and/or vinyl ester resin. Furthermore, utilization of a water soluble inhibitor system allowed for higher maximum temperature of conducting the reaction with gallic acid providing the highest stabilization of the system.

It is emphasized that the synthesis of the nanoparticles according to the invention should be conducted below the coagulation pH of the emulsion. The coagulation pH depends on the actual system utilised, including composition and concentration. For the systems in the examples, it was found that the coagulation pH was ca. 7.5. The relevant coagulation pH for a given system may easily be established by the person skilled in the art.

## Claims

1. A process for preparing organic nanoparticles comprising the steps of:
(a) preparing a solution comprising an unsaturated polyester and/or a vinyl ester resin, an initiator and a hydrophobic monomer where the unsaturated polyester and/or a vinyl ester resin and the initiator are dissolved in the hydrophobic monomer;
(b) emulsifying the solution obtained in step (a) in an aqueous phase to form an oil in water emulsion where discrete droplets of the solution from step (a) are emulsified in the water; and thereafter
(c) curing the emulsified solution.
**characterized in that** during the process steps the temperature is kept lower than the coagulation temperature of the emulsion; and the pH is kept lower than the coagulation pH of the emulsion; and where
the continuous aqueous phase of the emulsion comprises a base with a pKa of at least 10 in an effective amount to neutralize at least part of the terminal acid groups of the unsaturated polyester and/or vinyl ester resin.

2. The process according to claim 1, wherein the base is added in an amount to obtain an emulsion with a pH of from 3 to 10.

3. The process according to claim 2, wherein the base is added in an amount to obtain an emulsion with a pH of from 6 to 8.

4. The process according to any preceding claim, wherein the hydrophobic monomer is selected from the group consisting of aromatic (vinyl) compounds, methacrylates and acrylates.

5. The process according to any preceding claim, wherein the hydrophobic monomer is an aromatic monomer.

6. The process according to any preceding claim, wherein the unsaturated polyester and/or the vinyl ester resin has a number average molecular weight per reactive unsaturation in the range of from 250-2500 g/mol, preferably the unsaturated polyester and/or vinyl ester resin has at least 1 reactive unsaturations per molecule, more preferably the unsaturated polyester and/or vinyl ester resin has an average of at least 1.5 reactive unsaturations per molecule, and-most preferably, the unsaturated polyester and/or vinyl ester resin has an average of at least 2.0 reactive unsaturations per molecule.

7. The process according to any one of the preceding claims, wherein the unsaturated polyester and/or the vinyl ester resin has an acid value in the range of from 0-200 mg KOH/g resin, preferably the unsaturated polyester resin - if present - has an acid value in the range of from 10-50 mg KOH/g resin and the vinyl ester resin - if present - has an acid value in the range of from 0-10 mg KOH/g resin.

8. The process according to any one of the preceding claims, wherein the initiator is selected from the group consisting of peranhydrides, peresters and hydroperoxides.

9. The process according to any preceding claim, wherein the unsaturated polyester and/or the vinyl ester resin has a number average molecular weight per reactive unsaturation in the range of from 250-2500 g/mol, preferably the unsaturated polyester and/or vinyl ester resin has at least 1 reactive unsaturations per molecule, more preferably the unsaturated polyester and/or vinyl ester resin has an average of at least 1.5 reactive unsaturations per molecule, and most preferably, the unsaturated polyester and/or vinyl ester resin has an average of at least 2.0 reactive unsaturations per molecule.

10. The process according to any one of claims 1 to 8, wherein the unsaturated polyester and/or the vinyl ester resin has an acid value in the range of from 0-200 mg KOH/g resin, preferably the unsaturated polyester resin - if present - has an acid value in the range of from 10-50 mg KOH/g resin and the vinyl ester resin - if present - has an acid value in the range of from 0-10 mg KOH/g resin.

11. The process according to any preceding claim, further comprising the step of adding an inhibitor to the solution and/or the aqueous phase, preferably the inhibitor is a water soluble inhibitor, more preferably at least 90 weight-% of the inhibitor is in the water phase after emulsifying the solution, more preferably the inhibitor is selected from the group of water soluble inhibitors; such as gallic acid, 3-carboxy Tempo, Carboxy proxyl, propyl gallate, their derivates, their salts or combinations thereof; and/or chain transfer agents, such as mercapto ethanol, mercapto acetic acid, mercapto propionic acid, their derivates, their salts or combinations of these.

12. The process according to any preceding claim, wherein the number average molecular weight of the unsaturated polyester and/or the vinyl ester resin is in the range of from 250-5000 g/mol.

13. The process according to any preceding claim, wherein the weight ratio of the unsaturated polyester and/or the vinyl ester resin (A) and the hydrophobic monomer (B) in the solution in step (a) is in the range of from 95/5 - 40/60 (A/B), preferably the the weight ratio of the unsaturated polyester and/or the vinyl ester resin (A) and the hydrophobic monomer (B) in the solution in step (a) is in the range of from 80/20 - 40/60, and more preferably the the weight ratio of the unsaturated polyester and/or the vinyl ester resin (A) and the hydrophobic monomer (B) in the solution in step (a) is in the range of from 75/25 - 50/50 (A/B).

14. The process according to any preceding claim, wherein at least 50 weight-% of the hydrophobic monomer is styrene, preferably between 70-95 weight-% of the hydrophobic monomer is styrene.

15. The process according to any preceding claim, wherein less than 40 weight-% of the solution is styrene upon initiation of step (b), preferably 10-30 weight-% of the solution is styrene upon initiation of step (b).

16. The process according to any preceding claim, wherein no emulsifier is present in emulsifying step (b).

17. The process according to preceding claim, wherein the step of adding the base with pKa of at least 10 takes place after addition of the solution in the aqueous phase.

18. The process according to preceding claim, wherein the pH of the aqueous emulsion obtained in step (b) after formation of the polymer-based nanoparticles is in the range of from 5 to 8, preferably the pH of the aqueous emulsion obtained in step (b) after formation of the polymer-based nanoparticles is in the range of from 6 to 8.

19. The process according to any preceding claim, wherein the emulsifying in step (b) provides a droplet size of the solution in the emulsion of 5-1000 nm, preferably a droplet size of the solution in the emulsion of 50-400 nm.

20. The process according to any preceding claim, wherein the solution in step (a) is substantially free from a solvent other than the hydrophobic monomer.

21. The process according to any preceding claim, further comprising the step of separating the cured nanoparticles from the emulsion, and optionally agglomerating the cured nanoperticles prior to separating cured nanoparticles from the emulsion.

22. Organic nanoparticles obtainable by the process as defined in any preceding claim, wherein the nanoparticles are emulsified in an aqueous phase or separated from the aqueous emulsion.

23. Use of the organic nanoparticles as defined in claim 22 as plastic pigment, preferably as a plastic pigment for paper coating.

24. Paper comprising a coating, which coating comprises nanoparticles according to claim 22.

25. Dye composition comprising organic nanoparticles as defined in claim 22.

26. Toner composition comprising organic nanoparticles as defined in claim 22.

27. A process for preparing organic microparticles by subjecting organic nanoparticles as defined in claim 22 to a spray-drying treatment and/or a coagulation treatment and/or an agglomeration treatment, and recovering the organic microparticles.

28. Organic microparticles obtainable by the process as defined in claim 27.

29. Use of the organic microparticles as defined in claim 28 or the organic nanoparticles according to claim 22 in SMC; as a plastic pigment; as filler in composite materials, coatings, concrete, waxes; as spacer; as hybrid pigment; as encapsulating agent for example for dyes and UV-blockers and/or in adhesives.

## Patentansprüche

1. Verfahren zur Herstellung von organischen Nanopartikeln, umfassend die Schritte:
(a) Herstellen einer Lösung, die ein ungesättigtes Polyesterharz und/oder Vinylesterharz, einen Initiator und ein hydrophobes Monomer umfasst, wobei das ungesättigte Polyesterharz und/oder Vinylesterharz und der Initiator in dem hydrophoben Monomer gelöst werden;
(b) Emulgieren der in Schritt (a) erhaltenen Lösung in einer wässrigen Phase zur Bildung einer Öl-in-Wasser-Emulsion, wobei diskrete Tröpfchen der Lösung aus Schritt (a) in dem Wasser emulgiert werden; und danach
(c) Härten der emulgierten Lösung,
**dadurch gekennzeichnet, dass** während der Verfahrensschritte die Temperatur unter dem Koagulationstemperatur der Emulsion gehalten wird und der pH-Wert unter dem Koagulations-pH-Wert der Emulsion gehalten wird; und wobei
die kontinuierliche wässrige Phase der Emulsion eine Base mit einem pKa-Wert von mindestens 10 in einer zur Neutralisation mindestens eines Teils der Säureendgruppen des ungesättigten Polyesterharzes und/oder Vinylesterharzes wirksamen Menge umfasst.

2. Verfahren nach Anspruch 1, bei dem die Base in einer Menge zum Erhalt einer Emulsion mit einem pH-Wert von 3 bis 10 zugegeben wird.

3. Verfahren nach Anspruch 2, bei dem die Base in einer Menge zum Erhalt einer Emulsion mit einem pH-Wert von 6 bis 8 zugegeben wird.

4. Verfahren nach einem der vorhergehenden Ansprüche, bei dem das hydrophobe Monomer aus der Gruppe bestehend aus aromatischen (Vinyl-)Verbindungen, Methacrylaten und Acrylaten ausgewählt wird.

5. Verfahren nach einem der vorhergehenden Ansprüche, bei dem es sich bei dem hydrophoben Monomer um ein aromatisches Monomer handelt.

6. Verfahren nach einem der vorhergehenden Ansprüche, bei dem das ungesättigte Polyesterharz und/oder Vinylesterharz ein zahlenmittleres Molekulargewicht pro reaktive Ungesättigtheit im Bereich von 250-2500 g/mol aufweist, vorzugsweise das ungesättigte Polyesterharz und/oder Vinylesterharz mindestens 1 reaktive Ungesättigtheit pro Molekül aufweist, weiter bevorzugt das ungesättigte Polyesterharz und/oder Vinylesterharz durchschnittlich mindestens 1,5 reaktive Ungesättigtheiten pro Molekül aufweist und ganz besonders bevorzugt das ungesättigte Polyesterharz und/oder Vinylesterharz durchschnittlich mindestens 2,0 reaktive Ungesättigtheiten pro Molekül aufweist.

7. Verfahren nach einem der vorhergehenden Ansprüche, bei dem das ungesättigte Polyesterharz und/oder Vinylesterharz eine Säurezahl im Bereich von 0-200 mg KOH/g Harz aufweist, vorzugsweise das ungesättigte Polyesterharz - sofern vorhanden-eine Säurezahl im Bereich von 10-50 mg KOH/g Harz aufweist und das Vinylesterharz - sofern vorhanden
- eine Säurezahl im Bereich von 0-10 mg KOH/g Harz aufweist.

8. Verfahren nach einem der vorhergehenden Ansprüche, bei dem der Initiator aus der Gruppe bestehend aus Peranhydriden, Perestern und Hydroperoxiden ausgewählt wird.

9. Verfahren nach einem der vorhergehenden Ansprüche, bei dem das ungesättigte Polyesterharz und/oder Vinylesterharz ein zahlenmittleres Molekulargewicht pro reaktive Ungesättigtheit im Bereich von 250-2500 g/mol aufweist, vorzugsweise das ungesättigte Polyesterharz und/oder Vinylesterharz mindestens 1 reaktive Ungesättigtheit pro Molekül aufweist, weiter bevorzugt das ungesättigte Polyesterharz und/oder Vinylesterharz durchschnittlich mindestens 1,5 reaktive Ungesättigtheiten pro Molekül aufweist und ganz besonders bevorzugt das ungesättigte Polyesterharz und/oder Vinylesterharz durchschnittlich mindestens 2,0 reaktive Ungesättigtheiten pro Molekül aufweist.

10. Verfahren nach einem der Ansprüche 1 bis 8, bei dem das ungesättigte Polyesterharz und/oder Vinylesterharz eine Säurezahl im Bereich von 0-200 mg KOH/g Harz aufweist, vorzugsweise das ungesättigte Polyesterharz - sofern vorhanden - eine Säurezahl im Bereich von 10-50 mg KOH/g Harz aufweist und das Vinylesterharz - sofern vorhanden - eine Säurezahl im Bereich von 0-10 mg KOH/g Harz aufweist.

11. Verfahren nach einem der vorhergehenden Ansprüche, ferner umfassend den Schritt des Zugebens eines Inhibitors zu der Lösung und/oder der wässrigen Phase, wobei es sich bei dem Inhibitor vorzugsweise um einen wasserlöslichen Inhibitor handelt, weiter bevorzugt mindestens 90 Gew.-% des Inhibitors in der Wasserphase nach dem Emulgieren der Lösung vorliegen, der Inhibitor weiter bevorzugt aus der Gruppe von wasserlöslichen Inhibitoren, wie Gallussäure, 3-Carboxy-Tempo, Carboxy-Proxyl, Propylgallat, Derivaten davon, Salzen davon oder Kombinationen davon, und/oder Kettenübertragungsmitteln, wie Mercaptoethanol, Mercaptoessigsäure, Mercaptopropionsäure, Derivaten davon, Salzen davon oder Kombinationen davon, ausgewählt wird.

12. Verfahren nach einem der vorhergehenden Ansprüche, bei dem das zahlenmittlere Molekulargewicht des ungesättigten Polyesterharzes und/oder Vinylesterharzes im Bereich von 250-5000 g/mol liegt.

13. Verfahren nach einem der vorhergehenden Ansprüche, wobei das Gewichtsverhältnis des ungesättigten Polyesterharzes und/oder Vinylesterharzes (A) und des hydrophoben Monomers (B) in der Lösung in Schritt (a) im Bereich von 95/5 - 40/60 (A/B) liegt, das Gewichtsverhältnis des ungesättigten Polyesterharzes und/oder Vinylesterharzes (A) und des hydrophoben Monomers (B) in der Lösung in Schritt (a) vorzugsweise im Bereich von 80/20-40/60 (A/B) liegt und das Gewichtsverhältnis des ungesättigten Polyesterharzes und/oder Vinylesterharzes (A) und des hydrophoben Monomers (B) in der Lösung in Schritt (a) weiter bevorzugt im Bereich von 75/25 - 50/50 (A/B) liegt.

14. Verfahren nach einem der vorhergehenden Ansprüche, bei dem es sich bei mindestens 50 Gew.-% des hydrophoben Monomers um Styrol handelt und es sich vorzugsweise bei zwischen 70-95 Gew.-% des hydrophoben Monomers um Styrol handelt.

15. Verfahren nach einem der vorhergehenden Ansprüche, bei dem es sich bei Initiierung von Schritt (b) bei weniger als 40 Gew.-% der Lösung um Styrol handelt und es sich vorzugsweise bei Initiierung von Schritt (b) bei 10-30 Gew.-% der Lösung um Styrol handelt.

16. Verfahren nach einem der vorhergehenden Ansprüche, bei dem im Emulgierschritt (b) kein Emulgator vorliegt.

17. Verfahren nach einem der vorhergehenden Ansprüche, bei dem der Schritt des Zugebens der Base mit einem pKa-Wert von mindestens 10 nach Zugabe der Lösung in der wässrigen Phase erfolgt.

18. Verfahren nach einem der vorhergehenden Ansprüche, bei dem der pH-Wert der in Schritt (b) erhaltenen wässrigen Emulsion nach Bildung der polymerbasierten Nanopartikel im Bereich von 5 bis 8 liegt und der pH-Wert der in Schritt (b) erhaltenen wässrigen Emulsion nach Bildung der polymerbasierten Nanopartikel im Bereich von 6 bis 8 liegt.

19. Verfahren nach einem der vorhergehenden Ansprüche, bei dem das Emulgieren in Schritt (b) eine Tröpfchengröße der Lösung in der Emulsion von 5-1000 nm und vorzugsweise eine Tröpfchengröße der Lösung in der Emulsion von 50-400 nm ergibt.

20. Verfahren nach einem der vorhergehenden Ansprüche, bei dem die Lösung in Schritt (a) weitgehend frei von einem anderen Lösungsmittel als dem hydrophoben Monomer ist.

21. Verfahren nach einem der vorhergehenden Ansprüche, ferner umfassend den Schritt des Trennens der gehärteten Nanopartikel von der Emulsion und gegebenenfalls des Agglomerierens der gehärteten Nanopartikel vor der Trennung der gehärteten Nanopartikel von der Emulsion.

22. Organische Nanopartikel, die durch das Verfahren gemäß einem der vorhergehenden Ansprüche erhältlich sind, wobei die Nanopartikel in einer wässrigen Phase emulgiert oder von der wässrigen Emulsion getrennt sind.

23. Verwendung der organischen Nanopartikel gemäß Anspruch 22 als Kunststoffpigment, vorzugsweise als Kunststoffpigment für die Papierbeschichtung.

24. Papier mit einer Beschichtung, die Nanopartikel nach Anspruch 22 umfasst.

25. Farbstoffzusammensetzung, umfassend organische Nanopartikel gemäß Anspruch 22.

26. Tonerzusammensetzung, umfassend organische Nanopartikel gemäß Anspruch 22.

27. Verfahren zur Herstellung von organischen Mikropartikeln durch Sprühtrocknungsbehandlung und/oder Koagulationsbehandlung und/oder Agglomerationsbehandlung von organischen Nanopartikeln gemäß Anspruch 22 und Gewinnen der organischen Mikropartikel.

28. Organische Mikropartikel, die durch das Verfahren gemäß Anspruch 27 erhältlich sind.

29. Verwendung der organischen Mikropartikel gemäß Anspruch 28 oder der organischen Nanopartikel nach Anspruch 22 in SMC; als Kunststoffpigment; als Füllstoff in Verbundwerkstoffen, Überzügen, Beton, Wachsen; als Spacer; als Hybridpigment; als Verkapselungsmaterial beispielsweise für Farbstoffe und UV-Blocker und/oder in Klebstoffen.

## Revendications

1. Procédé de préparation de nanoparticules organiques comprenant les étapes consistant à :
(a) préparer une solution comprenant une résine de polyester insaturé et/ou d'ester vinylique, un initiateur et un monomère hydrophobe où la résine de polyester insaturé et/ou d'ester vinylique et l'initiateur sont dissous dans le monomère hydrophobe ;
(b) émulsionner la solution obtenue à l'étape (a) dans une phase aqueuse pour former une émulsion huile dans eau où des gouttelettes discrètes de la solution de l'étape (a) sont émulsionnées dans l'eau ; et par la suite
(c) durcir la solution émulsionnée,
**caractérisé en ce que**, pendant les étapes du procédé, la température est maintenue inférieure à la température de coagulation de l'émulsion, et le pH est maintenu inférieur au pH de coagulation de l'émulsion ; et où la phase aqueuse continue de l'émulsion comprend une base avec un pKa d'au moins 10 dans une quantité efficace pour neutraliser au moins une partie des groupes acides terminaux de la résine de polyester insaturé et/ou d'ester vinylique.

2. Procédé selon la revendication 1, dans lequel la base est ajoutée dans une quantité permettant d'obtenir une émulsion avec un pH de 3 à 10.

3. Procédé selon la revendication 2, dans lequel la base est ajoutée dans une quantité permettant d'obtenir une émulsion avec un pH de 6 à 8.

4. Procédé selon l'une quelconque des revendications précédentes, dans lequel le monomère hydrophobe est choisi dans le groupe constitué par les composés aromatiques (vinyliques), les méthacrylates et les acrylates.

5. Procédé selon l'une quelconque des revendications précédentes, dans lequel le monomère hydrophobe est un monomère aromatique.

6. Procédé selon l'une quelconque des revendications précédentes, dans lequel la résine de polyester insaturé et/ou d'ester vinylique a un poids moléculaire moyen en nombre par insaturation réactive dans la gamme de 250-2500 g/mol, de préférence la résine de polyester insaturé et/ou d'ester vinylique a au moins 1 insaturation réactive par molécule, mieux la résine de polyester insaturé et/ou d'ester vinylique a une moyenne d'au moins 1,5 insaturation réactive par molécule, et idéalement la résine de polyester insaturé et/ou d'ester vinylique a une moyenne d'au moins 2,0 insaturations réactives par molécule.

7. Procédé selon l'une quelconque des revendications précédentes, dans lequel la résine de polyester insaturé et/ou d'ester vinylique a un indice d'acide dans la gamme de 0-200 mg KOH/g de résine, de préférence la résine de polyester insaturé - si présente - a un indice d'acide dans la gamme de 10-50 mg KOH/g de résine et la résine d'ester vinylique - si présente - a un indice d'acide dans la gamme de 0-10 mg KOH/g de résine.

8. Procédé selon l'une quelconque des revendications précédentes, dans lequel l'initiateur est choisi dans le groupe constitué par les peranhydrides, les peresters et les hydroperoxydes.

9. Procédé selon l'une quelconque des revendications précédentes, dans lequel la résine de polyester insaturé et/ou d'ester vinylique a un poids moléculaire moyen en nombre par insaturation réactive dans la gamme de 250-2500 g/mol, de préférence la résine de polyester insaturé et/ou d'ester vinylique a au moins 1 insaturation réactive par molécule, mieux la résine de polyester insaturé et/ou d'ester vinylique a une moyenne d'au moins 1,5 insaturation réactive par molécule, et idéalement la résine de polyester insaturé et/ou d'ester vinylique a une moyenne d'au moins 2,0 insaturations réactives par molécule.

10. Procédé selon l'une quelconque des revendications 1 à 8, dans lequel la résine de polyester insaturé et/ou d'ester vinylique a un indice d'acide dans la gamme de 0-200 mg KOH/g de résine, de préférence la résine de polyester insaturé - si présente - a un indice d'acide dans la gamme de 10-50 mg KOH/g de résine et la résine d'ester vinylique - si présente - a un indice d'acide dans la gamme de 0-10 mg KOH/g de résine.

11. Procédé selon l'une quelconque des revendications précédentes, comprenant en outre l'étape d'addition d'un inhibiteur à la solution et/ou la phase aqueuse, de préférence l'inhibiteur est un inhibiteur hydrosoluble, mieux au moins 90 % en poids de l'inhibiteur est dans la phase aqueuse après émulsification de la solution, mieux encore l'inhibiteur est choisi dans le groupe des inhibiteurs hydrosolubles, tels que l'acide gallique, le 3-carboxy-TEMPO, le carboxy-PROXYL, le gallate de propyle, leurs dérivés, leurs sels ou les combinaisons de ceux-ci ; et/ou des agents de transfert de chaîne, tels que le mercaptoéthanol, l'acide mercaptoacétique, l'acide mercaptopropionique, leurs dérivés, leurs sels ou les combinaisons de ceux-ci.

12. Procédé selon l'une quelconque des revendications précédentes, dans lequel le poids moléculaire moyen en nombre de la résine de polyester insaturé et/ou d'ester vinylique se situe dans la gamme de 250-5000 g/mol.

13. Procédé selon l'une quelconque des revendications précédentes, dans lequel le rapport pondéral entre la résine de polyester insaturé et/ou d'ester vinylique (A) et le monomère hydrophobe (B) dans la solution à l'étape (a) se situe dans la gamme de 95/5 - 40/60 (A/B), de préférence le rapport pondéral entre la résine de polyester insaturé et/ou d'ester vinylique (A) et le monomère hydrophobe (B) dans la solution à l'étape (a) se situe dans la gamme de 80/20 - 40/60, et mieux encore le rapport pondéral entre la résine de polyester insaturé et/ou d'ester vinylique (A) et le monomère hydrophobe (B) dans la solution à l'étape (a) se situe dans la gamme de 75/25 - 50/50 (A/B).

14. Procédé selon l'une quelconque des revendications précédentes, dans lequel au moins 50 % en poids du monomère hydrophobe est du styrène, de préférence entre 70 et 95 % en poids du monomère hydrophobe est du styrène.

15. Procédé selon l'une quelconque des revendications précédentes, dans lequel moins de 40 % en poids de la solution est du styrène lors de l'initiation de l'étape (b), de préférence 10-30 % en poids de la solution est du styrène lors de l'initiation de l'étape (b).

16. Procédé selon l'une quelconque des revendications précédentes, dans lequel aucun émulsifiant n'est présent à l'étape d'émulsification (b).

17. Procédé selon l'une quelconque des revendications précédentes, dans lequel l'étape d'addition de la base avec un pKa d'au moins 10 a lieu après addition de la solution dans la phase aqueuse.

18. Procédé selon l'une quelconque des revendications précédentes, dans lequel le pH de l'émulsion aqueuse obtenue à l'étape (b) après formation des nanoparticules à base de polymère se situe dans la gamme de 5 à 8, de préférence le pH de l'émulsion aqueuse obtenue à l'étape (b) après formation des nanoparticules à base de polymère se situe dans la gamme de 6 à 8.

19. Procédé selon l'une quelconque des revendications précédentes, dans lequel l'émulsification à l'étape (b) fournit une taille de gouttelettes de la solution dans l'émulsion de 5-1000 nm, de préférence une taille de gouttelettes de la solution dans l'émulsion de 50-400 nm.

20. Procédé selon l'une quelconque des revendications précédentes, dans lequel la solution à l'étape (a) est sensiblement exempte de solvant en dehors du monomère hydrophobe.

21. Procédé selon l'une quelconque des revendications précédentes, comprenant en outre l'étape de séparation des nanoparticules durcies de l'émulsion, et éventuellement agglomération des nanoparticules durcie avant séparation des nanoparticules durcies de l'émulsion.

22. Nanoparticules organiques pouvant être obtenues par le procédé tel que défini dans l'une quelconque des revendications précédentes, les nanoparticules étant émulsionnées dans une phase aqueuse ou séparées de l'émulsion aqueuse.

23. Utilisation des nanoparticules organiques telles que définies dans la revendication 22 comme pigment plastique, de préférence comme pigment plastique pour couchage du papier.

24. Papier comprenant un enduit, lequel enduit comprend des nanoparticules selon la revendication 22.

25. Composition de colorant comprenant des nanoparticules organiques telles que définies dans la revendication 22.

26. Composition de toner comprenant des nanoparticules organiques telles que définies dans la revendication 22.

27. Procédé de préparation de microparticules organiques par soumission de nanoparticules organiques telles que définies dans la revendication 22 à un traitement de séchage par atomisation et/ou un traitement de coagulation et/ou un traitement d'agglomération, et récupération des microparticules organiques.

28. Microparticules organiques pouvant être obtenues par le procédé tel que défini dans la revendication 27.

29. Utilisation des microparticules organiques telles que définies dans la revendication 28 ou des nanoparticules organiques selon la revendication 22 dans des SMC ; comme pigment plastique ; comme charge dans des matériaux composites, des revêtements, du béton, des cires ; comme entretoise ; comme pigment hybride ; comme agent d'encapsulation par exemple pour colorants et bloqueurs d'UV ; et/ou dans des adhésifs.
